# EUROPEAN PATENT SPECIFICATION

(11) **EP 3 521 675 B1**
(45) Date of publication and mention of the grant of the patent: **07.12.2022**
(21) Application number: 17921978.7
(22) Date of filing: 30.08.2017
(51) Int. Cl.: F16L 37/08, F16L 33/22, F16L 33/30

(54) **PIPE FITTING CONNECTING METHOD**
VERBINDUNGSVERFAHREN FÜR EINE ROHRVERBINDUNG
PROCÉDÉ DE RACCORDEMENT D'UN RACCORD DE TUYAU

(30) Priority: 15.08.2017 CN 201710696636
(43) Date of publication of application: 07.08.2019
(73) Proprietor: Rifeng Enterprise Group Co., Ltd., Foshan, Guangdong 528000 (CN); Rifeng Technology Co., Ltd., Foshan, Guangdong 528000 (CN)
(72) Inventor: CAO, Huijian, Foshan Guangdong 528000 (CN); DIAO, Zhenbin, Foshan Guangdong 528000 (CN); LIN, Xiyong, Foshan Guangdong 528000 (CN); CHENG, Jiajia, Foshan Guangdong 528000 (CN); WANG, Hui, Foshan Guangdong 528000 (CN); HE, Wangzhi, Foshan Guangdong 528000 (CN); SUN, Shiyu, Foshan Guangdong 528000 (CN); FU, Xiuli, Foshan Guangdong 528000 (CN); XIE, Yong, Foshan Guangdong 528000 (CN)
(74) Representative: Appleyard Lees IP LLP
(86) International application number: PCT/CN2017/099578
(87) International publication number: WO 2019/033462

(56) References cited:
- EP-A1- 1 445 527
- EP-A2- 1 240 981
- WO-A1-98/41790
- WO-A1-2013/166552
- CN-A- 1 621 731
- CN-A- 104 395 665
- CN-U- 204 962 123
- GB-A- 808 984
- US-A- 4 635 972

## Description

### TECHNICAL FIELD

The present disclosure relates to a pipe fitting connecting technology, and more particularly, to a pipe fitting connecting method and a pipe connecting structure.

### BACKGROUND

The pipes are generally connected in one of the following two methods. In the first method, a sliding compression sleeve is sleeved on a pipe at first, and then a port of the pipe is enlarged by using an expander. Then an end of a core body of a joint is inserted into the enlarged pipe port, and finally the sliding compression-sleeve is forcibly pushed to the core body of the joint by using a pushing tool, so that the pipe is pressed by the core body and the sliding compression sleeve in order to achieve connection and sealing. In this way, an inner surface of the expanded pipe would have a deep indentation, and the indentation of the inner hole is likely to cause water leakage. In addition, the expander used is a kind of multi-chip expander, and the pipe is generally easy to be cracked due to an uneven force when the inner hole is expanded. Moreover, in this way, both the expander and the pushing tool must be used, so the operation is complex. In the second method, an elastic sleeve is sleeved on a pipe at first, and then the pipe and the elastic sleeve are enlarged by using a multi-jaw expander. The inner diameters of the pipe and the elastic sleeve need to be expanded to be larger than an external diameter of an insertion end of a core body by about 3 mm, then the insertion end of the core body is put into the pipe and kept at this position for 5-10 seconds, and hands can be released after the pipe and the elastic sleeve have been completely shrank. In this way, an inner surface of the flared pipe would also have a deep indentation. It is possible that the shrinkage pressure of the elastic sleeve cannot flatten the indentation, thereby resulting in a water leakage accident. In addition, the expander used is a kind of multi-chip expander, when the inner hole is expanded, the pipe is generally more easier to be cracked due to an uneven force and a large amount of expansion, so the cracked portion needs to be cut and the pipe needs to be re-expanded. During installation, 5-10 seconds of waiting time is required. If the operator waits for insufficient time, the inserting part of the core body of the pipe may be pulled out or displaced, which may cause a leakage accident. The shrinkage speed of the elastic sleeve will be affected by the environment temperature. The shrinkage time required in a low temperature environment is longer.

WO 98/41790 A1 discloses a pipe connection including an elastic pipe, an insert end , and a flexible pressure ring , wherein the outer diameter of the insert end is larger than the inner diameter of the pipe before the insert end is inserted into the pipe, and at the end of the insert end there can be a protrusion. When connecting the elastic pipe and the insert end, in the first step, the end of the pipe must be provided with a bevel on the inside by means of a conical mandrel so as to insert the insert end into the pipe. The pressure ring is far away the pipe connection point during the insert end being inserted into the pipe, and after that it is pushed over the protrusion nto place. This pipe connecting method is rather complicated and wastes a lot of working time.

US 4635972 A discloses a pipe coupling apparatus includes: a pipe; a plastic fitting having a pair of axially spaced apart circular flanges, as well as spigots, the spigots with frustonconically shaped annular sealing rings are formed on the distal extremities with nipple; sleeves being telescoped onto the pipe. When the plastic fitting and the pipe are to be coupled together, the sleeves are previously telescoped onto the pipe and slid a distance from the pipe end exceeding the length of the sleeves, tines of a first fork are inserted in straddling relationship into the receiving groove between the circular flanges, tines of a second fork are inserted in straddling relationship over the pipe, the first fork drives the spigots into the pipe, and the pipe is expanded, and then the second fork drives the sleeves onto the expanded section of the pipe surrounding the spigot.

### SUMMARY

The present disclosure aims to overcome defects of the prior art, and provide a pipe fitting connecting method and a pipe connecting structure, which can effectively avoid pipe cracking, and have a high connection efficiency.

A pipe fitting connecting method is provided, including:
sleeving an elastic sleeve sleeved on a pipe at a port of the pipe, and clamping the pipe by a jacket of a pushing tool;
fastening a connecting pipe body to a snap ring of the pushing tool, a front end portion of an inserting part of the connecting pipe body being a guiding section, a rear end portion of the inserting part of the connecting pipe body being an expansion section, an outer diameter of the guiding section being equal to an inner diameter of the pipe, and an outer periphery of the expansion section being provided with a conical ring having a small front end and a large rear end; and
activating the pushing tool to force the inserting part of the connecting pipe body to be inserted into the pipe in such a way that the pipe and the elastic sleeve are gradually expanded along the conical ring of the expansion section, and when the inserting part is inserted in place, the pipe and the elastic sleeve retracts so that the pipe is tightly connected to the connecting pipe body.

The further technical solutions are as follows.

The connecting pipe body is provided with an annular protrusion, the protrusion is provided with an annular groove, and the connecting pipe body is fastened to the U-shaped snap ring of the pushing tool through the annular groove.

The expansion section is provided with two conical rings sequentially along a length direction of the expansion section, and the inserting part expands the pipe and the elastic sleeve through the two conical rings.

The conical ring has a cross section in a triangular tooth shape, a trapezoidal tooth shape or an arc tooth shape.

An end of the elastic sleeve close to the port of the pipe is provided with a plurality of barbs, the barbs are arranged in a circumferential direction of the elastic sleeve, and the barbs are adapted to catch an end face of the pipe.

An end of the elastic sleeve close to the port of the pipe is provided with a retaining ring, and the retaining ring is adapted to abut against an end face of the pipe.

A front end of the guiding section is provided with a chamfer.

The connecting pipe body is a rigid plastic fitting or a metal fitting, and the elastic sleeve is a plastic sleeve or a metal sleeve each having a retraction property.

Both ends of the connecting pipe body are inserting parts. The annular groove is disposed between two inserting parts. The inserting parts at the both ends of the connecting pipe body are adapted to be inserted into two pipes respectively so that the two pipes are connected together.

A pipe connecting structure is also provided, including a connecting pipe body and an elastic sleeve. The elastic sleeve is sleeved on a pipe to be connected. A front end portion of an inserting part of the connecting pipe body is a guiding section, a rear end portion of the inserting part of the connecting pipe body is an expansion section, and an outer diameter of the guiding section is equal to an inner diameter of the pipe. An outer periphery of the expansion section is provided with a conical ring having a small front end and a large rear end. The inserting part is inserted into the pipe by the pipe fitting connecting method.

The advantages or principles of the foregoing technical solutions are described below:
In the foregoing pipe fitting connecting method and pipe connecting structure, the elastic sleeve having a resilience property to an extent is sleeved on the pipe in advance, and then the inserting part of the connecting pipe body is inserted into the pipe. The guiding section of the inserting part plays a role of guiding the insertion. An end of the conical ring of the expansion section close to the guiding section has a small diameter, and the other end of the conical ring away from the guiding section has a large diameter. The pipe and the elastic sleeve are gradually expanded along with the insertion of the inserting part. When the inserting part is inserted in place, the pipe and the elastic sleeve retract so that the inner surface of the pipe is tightly connected to the outer surface of the connecting pipe body, and the elastic force of the elastic sleeve presses against the outer surface of the pipe, thereby further improving the sealing performance between the pipe and the connecting pipe body. In contrast to the conventional pipe fitting connecting method, in the present disclosure the expanding operation is directly preformed through the inserting part of the connecting pipe body, without using an expander. The operation can be done in one step, and thus a lot of working time can be saved. Moreover, when the inserting part is inserted into the pipe, the pipe and the elastic sleeve are uniformly enlarged over the entire periphery, as long as the expansion amount is sufficient for the insertion of the inserting part, thereby effectively solving the pipe damage caused by the excessive expansion. In addition, the conical ring of the expansion section having a small front end and a large rear end forms a barb-like structure, which makes the inserted pipe difficult to be pulled out, and further improves the reliability of the connection between the pipe and the connecting pipe body. Moreover, the elastic sleeve and the pipe are expanded and then retract together, so that the connecting pipe body is pressed tightly, thereby achieving a firmly connection and sealing without using a sealing ring.

### BRIEF DESCRIPTION OF THE DRAWINGS

FIG. 1 is a schematic structural diagram showing a connecting pipe body and a pipe prior to connection according to an embodiment.
FIG. 2 is a schematic cross-sectional diagram showing a connecting pipe body and a pipe after connection according to an embodiment.

Description of the reference signs:
01, jacket; 02, snap ring; 10, elastic sleeve; 110, barb; 20, pipe; 30, connecting pipe body; 310, inserting part; 312, guiding section; 314, expansion section; 316, conical ring; 318, chamfer; 320, annular protrusion; and 322, annular groove.

### DETAILED DESCRIPTION

In order to facilitate the understanding of the present disclosure, the present disclosure is described more fully hereinafter with reference to the accompanying drawings. The preferred embodiments of the present disclosure are shown in the accompanying drawings. The various embodiments of the present disclosure may, however, be embodied in many different forms and should not be construed as limited to the embodiments set forth herein. Rather, these embodiments are provided so that the present disclosure will be more thoroughly and completely understood.

It should be noted that when an element is referred to as being "fastened" to another element, it can be directly on another element or an intermediate element can be present. When an element is referred to as being "connected" to another element, it can be directly connected to another element or an intermediate element can be present. Rather, when an element is referred to as being "directly on" another element, there is no intermediate element. The terms "vertical", "horizontal", "left", "right" and the like, as used herein, are used for purposes of illustration only and do not represent any embodiment.

All technical and scientific terms used herein have the same meaning as commonly understood by one of ordinary skill in the art to which this disclosure belongs, unless otherwise defined. The terminology used in the description of the present disclosure is for the purpose of describing particular embodiments and is not intended to limit the invention. The term "and/or" used herein includes any and all combinations of one or more of the associated listed items.

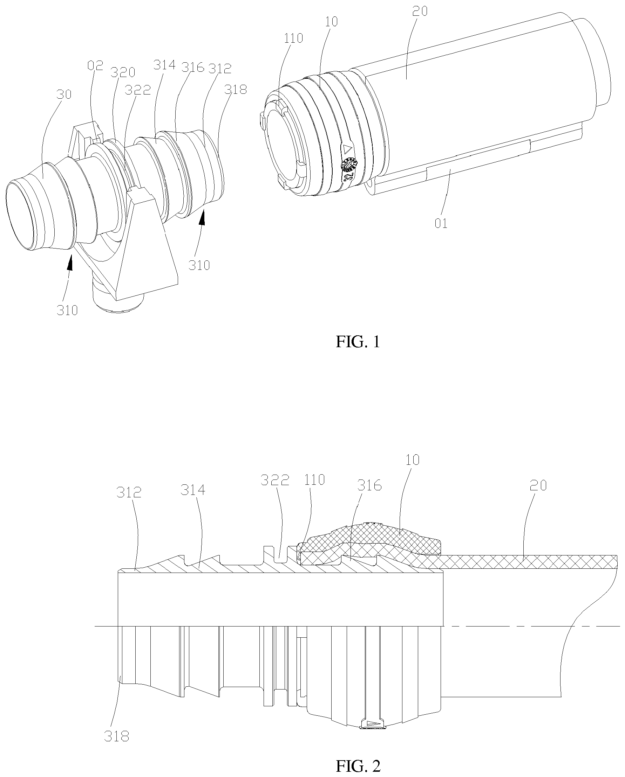

Referring to FIG. 1 and FIG. 2, a pipe fitting connecting method includes the following steps:
sleeving an elastic sleeve 10 on a pipe 20 at a port of the pipe 20, and clamping the pipe 20 by a jacket 01 of a pushing tool;
fastening a connecting pipe body 30 to a snap ring 02 of the pushing tool, a front end portion of an inserting part 310 of the connecting pipe body 30 being a guiding section 310, a rear end portion of the inserting part of the connecting pipe body 30 being an expansion section 314, an outer diameter of the guiding section 312 being equal to an inner diameter of the pipe 20, and an outer periphery of the expansion section 314 being provided with a conical ring 316 having a small front end and a large rear end; and
activating the pushing tool to force the inserting part 310 of the connecting pipe body 30 to be inserted into the pipe 20 in such a way that the pipe 20 and the elastic sleeve 10 are gradually expanded along the conical ring 316 of the expansion section 314, and when the inserting part 310 is inserted in place, the pipe 20 and the elastic sleeve 10 retracts so that the pipe 20 is tightly connected to the connecting pipe body 30.

In this method, the elastic sleeve 10 having a resilience property to an extent is sleeved on the pipe 20 in advance, and then the inserting part 310 of the connecting pipe body 30 is inserted into the pipe 20. The guiding section 312 of the inserting part 310 plays a role of guiding the insertion. An end of the conical ring 316 of the expansion section 314 close to the guiding section 312 has a small diameter, and the other end of the conical ring 316 away from the guiding section 312 has a large diameter. The pipe 20 and the elastic sleeve 10 are gradually expanded along with the insertion of the inserting part 310. When the inserting part 310 is inserted in place, the pipe 20 and the elastic sleeve 10 retract so that the inner surface of the pipe 20 is tightly connected to the outer surface of the connecting pipe body 30, and the elastic force of the elastic sleeve 10 presses against the outer surface of the pipe 20, thereby further improving the sealing performance between the pipe 20 and the connecting pipe body 30. In contrast to the conventional pipe fitting connecting method, in the present disclosure the expanding operation is directly preformed through the inserting part 310 of the connecting pipe body 30, without using an expander. The operation can be done in one step, and thus a lot of working time can be saved. Moreover, when the inserting part 310 is inserted into the pipe 20, the pipe 20 and the elastic sleeve 10 are uniformly enlarged over the entire periphery, as long as the expansion amount is sufficient for the insertion of the inserting part 310, thereby effectively solving the pipe 20 damage caused by the excessive expansion. In addition, the conical ring 316 of the expansion section 314 having a small front end and a large rear end forms a barb-like structure, which makes the inserted pipe 20 difficult to be pulled out, further improves the reliability of the connection between the pipe 20 and the connecting pipe body. Moreover, the elastic sleeve 10 and the pipe 20 are expanded and then retract together, so that the connecting pipe body is pressed tightly, thereby achieving a firmly connection and sealing without using a sealing ring. In this embodiment, the front end portion refers to an end portion close to the front in an insertion direction of the inserting part 310, and a reverse end portion is the rear end portion.

As shown in FIG. 1 and FIG. 2, the connecting pipe body 30 is provided with an annular protrusion 320, the protrusion is provided with an annular groove 322, and the connecting pipe body 30 is fastened to the U-shaped snap ring 02 of the pushing tool through the annular groove322. The annular protrusion 320 is not only provided with the annular groove 322 configured to fasten the connecting pipe body 30 to the snap ring 02 of the pushing tool, but also acts as a limit after the inserting part 310 is inserted into the pipe 20. When an end face of the pipe 20 abuts against the annular protrusion 320, the inserting part 310 is inserted in place and no longer continues to insert. A front end of the guiding section 312 is provided with a chamfer 318, in order to facilitate inserting the inserting part 310 into the pipe 20.

Further, the expansion section 314 is provided with two conical rings 316 sequentially in a length direction of the expansion section 314. The inserting part 310 expands the pipe 20 and the elastic sleeve 10 through the two conical rings 316. Since the diameter of the large end of each conical ring is larger than the inner diameter of the pipe 20, lengths of portions of the pipe 20 and the elastic sleeve 10 being expanded are increased, by means of the pipe 20 and the elastic sleeve 10 being expanded by the two conical rings 316 together. Therefore, the area where the pipe 20 and the elastic sleeve 10 closely connected to the connecting pipe body is increased after the retraction of the pipe 20 and the elastic sleeve 10, and the sealing performance and the reliability of the connection are further improved.

As shown in FIG. 2, the cross section of the conical ring 316 is in a triangular tooth shape in this embodiment, so that the inserting part 310 only can enter into the inner hole of the pipe 20 but cannot be pulled out after the inserting part 310 is inserted into the pipe 20. The cross section of the conical ring may be in a trapezoidal tooth shape or an arc tooth shape as required.

As shown in FIG. 1 and FIG. 2, an end of the elastic sleeve 10 close to the port of the pipe 20 is provided with a plurality of barbs 110, the barbs 110 are arranged in a circumferential direction of the elastic sleeve 10, and the barbs 110 are adapted to catch an end face of the pipe 20. When the barbs 110 catch the end face of the pipe 20, the elastic sleeve 10 can be firmly fixed at the port of the pipe 20 during the pulling process without being displaced. According to actual needs, it is possible that a retaining ring is disposed at an end of the elastic sleeve 10 close to the port of the pipe 20. The retaining ring abuts against the end face of the pipe 20 to stabilize the elastic sleeve 10.

The connecting pipe body 30 is a rigid plastic fitting or a metal fitting, made of for example, copper, stainless steel, PPSU, etc., which is able to expand the pipe 20. The elastic sleeve 10 is a plastic sleeve or a metal sleeve each having a retraction property, made of for example, PE, 301 stainless steel, etc., which can press the pipe 20 on the connecting pipe body 30 tightly by elastic force.

As shown in FIG. 1 and FIG. 2, both ends of the connecting pipe body are inserting parts. The annular groove 322 is disposed between two inserting parts 310, the inserting parts 310 of the both ends of the connecting pipe body 30 are inserted into two pipes 20 respectively so that the two pipes 20 are connected together. That is, the inserting parts 310 at the both ends of the connecting pipe body 30 are respectively inserted into two different pipes 20 to realize sealing connection between the two pipes 20. According to actual needs, the connecting pipe body 30 may be a tee pipe with three inserting parts, a four-way pipe with four inserting parts or the like, thereby realizing connection of three pipes, four pipes and the like.

As shown in FIG. 1 and FIG. 2, a pipe connecting structure includes a connecting pipe body 30 and an elastic sleeve 10. The elastic sleeve 10 is sleeved on a pipe 20 to be connected. A front end portion of an inserting part 310 of the connecting pipe body 30 is a guiding section 312, and a rear end portion of the inserting part of the connecting pipe body 30 is an expansion section 314. An outer diameter of the guiding section 312 is equal to an inner diameter of the pipe 20. An outer periphery of the expansion section 314 is provided with a conical ring 316 having a small front end and a large rear end. The inserting part 310 is inserted into the pipe 20 by the pipe fitting connecting method. The pipe connecting structure has the advantages of tight connection, good sealing effect, simple structure and convenient operation, and the pipe 20 is not easy to be cracked during the connecting process.

All of the technical features in the above embodiments may be employed in arbitrary combinations. For purpose of simplifying the description, not all arbitrary combinations of the technical features in the above embodiments are described. However, as long as such combinations of the technical features are not contradictory, they should be considered as within the scope of the disclosure in this specification.

## Claims

1. A pipe fitting connecting method, comprising:
sleeving an elastic sleeve (10) on a pipe (20) at a port of the pipe (20), and clamping the pipe (20) by a jacket (01) of a pushing tool, wherein an end of the elastic sleeve (10) close to the port of the pipe (20) is provided with a plurality of barbs (110), the barbs (110) are arranged in a circumferential direction of the elastic sleeve (10), and the barbs (110) are adapted to catch an end face of the pipe (20);
fastening a connecting pipe body (30) to a snap ring (02) of the pushing tool, wherein a front end portion of an inserting part (310) of the connecting pipe body (30) is a guiding section (312), a rear end portion of the inserting part (310) of the connecting pipe body (30) is an expansion section (314), an outer diameter of the guiding section (312) is equal to an inner diameter of the pipe (20), and an outer periphery of the expansion section (314) is provided with a conical ring (316) having a small front end and a large rear end; and
activating the pushing tool to force the inserting part (310) of the connecting pipe body (30) to be inserted into the pipe (20) in such a way that the pipe (20) and the elastic sleeve (10) are gradually expanded along the conical ring (316) of the expansion section (314), and when the inserting part (310) is inserted in place, the pipe (20) has a portion sandwiched between the elastic sleeve (10) and the conical ring (316), and the pipe (20) and the elastic sleeve (10) retracts so that the pipe (20) is tightly connected to the connecting pipe body (30).

2. The pipe fitting connecting method according to claim 1, wherein the connecting pipe body (30) is provided with an annular protrusion (320), the protrusion (320) is provided with an annular groove (322), the connecting pipe body (30) is fastened to the snap ring (02) of the pushing tool through the annular groove (322), and the snap ring (02) is U-shaped.

3. The pipe fitting connecting method according to claim 1, wherein the expansion section (314) is provided with two conical rings (316) sequentially along a length direction of the expansion section (314), and the inserting part (310) expands the pipe (20) and the elastic sleeve (10) through the two conical rings (316).

4. The pipe fitting connecting method according to claim 3, wherein each of the two conical rings (316) has a cross section in a triangular tooth shape, a trapezoidal tooth shape or an arc tooth shape.

5. The pipe fitting connecting method according to claim 2, wherein an end of the elastic sleeve (10) close to the port of the pipe (20) is provided with a retaining ring, and the retaining ring is adapted to abut against an end face of the pipe (20).

6. The pipe fitting connecting method according to claim 1, wherein a front end of the guiding section (312) is provided with a chamfer (318).

7. The pipe fitting connecting method according to claim 1, wherein the connecting pipe body (30) is a rigid plastic fitting or a metal fitting, and the elastic sleeve (10) is a plastic sleeve or a metal sleeve each having a property of retraction.

8. The pipe fitting connecting method according to claim 2, wherein both ends of the connecting pipe body (30) are inserting parts (310), the annular groove (322) is disposed between two inserting parts (310), and the inserting parts (310) at the both ends of the connecting pipe body (30) are adapted to be inserted into two pipes (20) respectively so that the two pipes (20) are connected together.

## Patentansprüche

1. Rohrformstückverbindungsverfahren, umfassend:
Schieben einer elastischen Hülse (10) auf ein Rohr (20) an einem Anschluss des Rohrs (20) und Festspannen des Rohrs (20) mittels eines Mantels (01) eines Schiebewerkzeugs, wobei ein Ende der elastischen Hülse (10) in der Nähe des Anschlusses des Rohrs (20) mit einer Vielzahl von Widerhaken (110) versehen ist, die Widerhaken (110) in einer Umfangsrichtung der elastischen Hülse (10) angeordnet sind und die Widerhaken (110) dazu ausgeführt sind, eine Endfläche des Rohrs (20) einzufangen,
Befestigen eines Verbindungsrohrkörpers (30) an einen Schnappring (02) des Schiebewerkzeugs, wobei ein vorderer Endabschnitt eines Einführteils (310) des Verbindungsrohrkörpers (30) ein Führungsabschnitt (312) ist, ein hinterer Endabschnitt des Einführteils (310) des Verbindungsrohrkörpers (30) ein Expansionsabschnitt (314) ist, ein Außendurchmesser des Führungsabschnitts (312) gleich einem Innendurchmesser des Rohrs (20) ist und ein äußerer Umfang des Expansionsabschnitts (314) mit einem konischen Ring (316) versehen ist, der ein kleines Vorderende und ein großes Hinterende hat, und
Betätigen des Schiebewerkzeugs, um den in das Rohr (20) einzuführenden Einführteil (310) des Verbindungsrohrkörpers (30) so mit Kraft zu beaufschlagen, dass das Rohr (20) und die elastische Hülse (10) allmählich entlang des konischen Rings (316) des Expansionsabschnitts (314) expandiert werden, und, wenn der Einführteil (310) an Ort und Stelle eingeführt worden ist, das Rohr (20) einen Abschnitt hat, der zwischen der elastischen Hülse (10) und dem konischen Ring (316) liegt, und sich das Rohr (20) und die elastische Hülse (10) zurückziehen, so dass das Rohr (20) eng mit dem Verbindungsrohrkörper (30) verbunden ist.

2. Rohrformstückverbindungsverfahren nach Anspruch 1, wobei der Verbindungsrohrkörper (30) mit einem ringförmigen Vorsprung (320) versehen ist, der Vorsprung (320) mit einer ringförmigen Nut (322) versehen ist, der Verbindungsrohrkörper (30) durch die ringförmige Nut (322) an dem Schnappring (02) des Schiebewerkzeugs befestigt ist und der Schnappring (02) U-förmig ist.

3. Rohrformstückverbindungsverfahren nach Anspruch 1, wobei der Expansionsabschnitt (314) mit zwei konischen Ringen (316) nacheinander entlang einer Längenrichtung des Expansionsabschnitts (314) versehen ist und der Einführteil (310) das Rohr (20) und die elastische Hülse (10) durch die beiden konischen Ringe (316) expandiert.

4. Rohrformstückverbindungsverfahren nach Anspruch 3, wobei jeder der beiden konischen Ringe (316) einen Querschnitt in der Form eines dreieckigen Zahns, eines trapezförmigen Zahns oder eines bogenförmigen Zahns hat.

5. Rohrformstückverbindungsverfahren nach Anspruch 2, wobei eine Ende der elastischen Hülse (10) in der Nähe des Anschlusses des Rohrs (20) mit einem Haltering versehen ist und der Haltering dazu ausgeführt ist, an einer Endfläche des Rohrs (20) anzuliegen.

6. Rohrformstückverbindungsverfahren nach Anspruch 1, wobei ein Vorderende des Führungsabschnitts (312) mit einer Abschrägung (318) versehen ist.

7. Rohrformstückverbindungsverfahren nach Anspruch 1, wobei der Verbindungsrohrkörper (30) ein starres Kunststoffrohrverbindungsstück oder ein Metallrohrverbindungsstück ist und die elastische Hülse (10) eine Kunststoffhülse oder eine Metallhülse ist, die jeweils eine Rückzugseigenschaft haben.

8. Rohrformstückverbindungsverfahren nach Anspruch 2, wobei beide Enden des Verbindungsrohrkörpers (30) Einführteile (310) sind, die ringförmige Nut (322) zwischen zwei Einführteilen (310) angeordnet ist und die Einführteile (310) an den beiden Enden des Verbindungsrohrkörpers (30) dazu ausgeführt sind, jeweils in zwei Rohre (20) eingeführt zu werden, so dass die beiden Rohre (20) miteinander verbunden werden.

## Revendications

1. Procédé de raccordement de raccord de tuyau, comprenant :
le manchonnage d'un manchon élastique (10) sur un tuyau (20) au niveau d'un orifice du tuyau (20), et le serrage du tuyau (20) par une gaine (01) d'un outil de poussée, dans lequel une extrémité du manchon élastique (10) proche de l'orifice du tuyau (20) est pourvue d'une pluralité de barbes (110), les barbes (110) sont disposées dans une direction circonférentielle du manchon élastique (10), et les barbes (110) sont adaptées pour attraper une face d'extrémité du tuyau (20) ;
la fixation d'un corps de tuyau de raccordement (30) à un anneau élastique (02) de l'outil de poussée, dans lequel une partie d'extrémité avant d'une partie d'insertion (310) du corps de tuyau de raccordement (30) est une section de guidage (312), une partie d'extrémité arrière de la partie d'insertion (310) du corps de tuyau de raccordement (30) est une section d'expansion (314), un diamètre extérieur de la section de guidage (312) est égal à un diamètre intérieur du tuyau (20), et une périphérie extérieure de la section d'expansion (314) est pourvue d'un anneau conique (316) ayant une petite extrémité avant et une grande extrémité arrière ; et
l'activation de l'outil de poussée pour forcer la partie d'insertion (310) du corps de tuyau de raccordement (30) à être insérée dans le tuyau (20) de telle sorte que le tuyau (20) et le manchon élastique (10) sont progressivement expansés le long de l'anneau conique (316) de la section d'expansion (314), et lorsque la partie d'insertion (310) est insérée en place, le tuyau (20) a une partie prise en sandwich entre le manchon élastique (10) et l'anneau conique (316), et le tuyau (20) et le manchon élastique (10) se rétractent de sorte que le tuyau (20) est raccordé de manière étanche au corps de tuyau de raccordement (30).

2. Procédé de raccordement de raccord de tuyau selon la revendication 1, dans lequel le corps de tuyau de raccordement (30) est muni d'une saillie annulaire (320), la saillie (320) est munie d'une rainure annulaire (322), le corps de tuyau de raccordement (30) est fixé à l'anneau élastique (02) de l'outil de poussée à travers la rainure annulaire (322), et l'anneau élastique (02) est en forme de U.

3. Procédé de raccordement de raccord de tuyau selon la revendication 1, dans lequel la section d'expansion (314) est munie de deux anneaux coniques (316) séquentiellement le long d'une direction de longueur de la section d'expansion (314), et la partie d'insertion (310) expanse le tuyau (20) et le manchon élastique (10) à travers les deux anneaux coniques (316).

4. Procédé de raccordement de raccord de tuyau selon la revendication 3, dans lequel chacun des deux anneaux coniques (316) a une section transversale en forme de dent triangulaire, de dent trapézoïdale ou de dent en arc.

5. Procédé de raccordement de raccord de tuyau selon la revendication 2, dans lequel une extrémité du manchon élastique (10) proche de l'orifice du tuyau (20) est munie d'une bague de retenue, et la bague de retenue est adaptée pour venir en butée contre une face d'extrémité du tuyau (20).

6. Procédé de raccordement de raccord de tuyau selon la revendication 1, dans lequel une extrémité avant de la section de guidage (312) est pourvue d'un chanfrein (318) .

7. Procédé de raccordement de raccord de tuyau selon la revendication 1, dans lequel le corps de tuyau de raccordement (30) est un raccord en plastique rigide ou un raccord métallique, et le manchon élastique (10) est un manchon en plastique ou un manchon métallique ayant chacun une propriété de rétraction.

8. Procédé de raccordement de raccord de tuyau selon la revendication 2, dans lequel les deux extrémités du corps de tuyau de raccordement (30) sont des parties d'insertion (310), la rainure annulaire (322) est disposée entre deux parties d'insertion (310), et les parties d'insertion (310) aux deux extrémités du corps de tuyau de raccordement (30) sont adaptées pour être insérées dans deux tuyaux (20) respectivement de sorte que les deux tuyaux (20) sont raccordés ensemble.
